# EUROPÄISCHE PATENTSCHRIFT

(11) **EP 1 177 218 B1**
(45) Veröffentlichungstag und Bekanntmachung des Hinweises auf die Patenterteilung: **11.12.2002**
(21) Anmeldenummer: 00929453.9
(22) Anmeldetag: 27.04.2000
(51) Int. Cl.: C08F 2/42

(54) **VERFAHREN ZUR SOFORTBEENDIGUNG VON RADIKALISCHEN POLYMERISATIONEN**
METHOD OF IMMEDIATELY TERMINATING FREE-RADICAL POLYMERISATION PROCESSES
PROCEDE POUR L'ARRET IMMEDIAT DE POLYMERISATIONS RADICALAIRES

(30) Priorität: 27.04.1999 DE 19918970
(43) Veröffentlichungstag der Anmeldung: 06.02.2002
(73) Patentinhaber: BASF AKTIENGESELLSCHAFT, 67056 Ludwigshafen (DE)
(72) Erfinder: AICHINGER, Heinrich, D-68199 Mannheim (DE); NESTLER, Gerhard, D-67061 Ludwigshafen (DE); SCHRÖDER, Jürgen, D-67071 Ludwigshafen (DE)
(74) Vertreter: Isenbruck, Günter, Dr.
(86) Internationale Anmeldenummer: EP0003836
(87) Internationale Veröffentlichungsnummer: WO00064947

(56) Entgegenhaltungen:
- WO-A-99/21893
- DE-A- 19 835 730
- DATABASE WPI Section Ch, Week 199812 Derwent Publications Ltd., London, GB; Class A41, AN 1998-128875 XP002143663 ANONYMOUS: "Apparatus for introducing fluid into container to stabilise contents and prevent undesired reaction - mounted above contents and having telescopic tube, with bursting disc at its end, which is axially extended by fluid pressure to contact contents and introduce fluid only when needed" & RESEARCH DISCLOSURE, Bd. 405, Nr. 033, 10. Januar 1998 (1998-01-10), Emsworth, GB
- DATABASE WPI Section Ch, Week 199243 Derwent Publications Ltd., London, GB; Class A18, AN 1992-353904 XP002143664 & JP 04 256429 A (ARAKAWA CHEM IND LTD), 11. September 1992 (1992-09-11)
- DATABASE COMPENDEX [Online] ENGINEERING INFORMATION, INC., NEW YORK, NY, US; SCHULZE STEFANIE ET AL: "Aspects of the safe storage of acrylic monomers: Kinetics of the oxygen consumption" Database accession no. EIX99034476491 XP002143662 & CHEM ENG TECHNOL;CHEMICAL ENGINEERING & TECHNOLOGY OCT 1998 WILEY-VCH VERLAG BERLIN GMBH, BERLIN, GER, Bd. 21, Nr. 10, Oktober 1998 (1998-10), Seiten 829-837,

## Beschreibung

Vorliegende Erfindung betrifft ein Verfahren zur Sofortbeendigung radikalischer Polymerisationen. Einmal ausgelöst, verlaufen radikalische Polymerisationen normalerweise ausgeprägt exotherm, d.h., unter starker Wärmeentwicklung, wobei die freigesetzte Polymerisationswärme, für den Fall, daß sie nicht abgeführt wird, die radikalische Polymerisation zusätzlich beschleunigt.

Erfolgt bei gewollten radikalischen Polymerisationen vorgenannte Wärmeabfuhr in mangelhafter Weise, besteht daher die Gefahr, daß die Polymerisation so heftig verläuft, daß das das Polymerisationsgemisch enthaltende Gefäß explodiert, wenn der außer Kontrolle geratenen Polymerisation (z.B. eine radikalische Substanz-, Lösungs-, Emulsions- oder Suspensionspolymerisation von wenigstens eine ethylenisch ungesättigte Gruppe aufweisenden Verbindungen (Monomeren)) nicht entgegengetreten wird.

Ein solches wirksames Entgegentreten wird insbesondere im Fall von ungewollt ausgelösten radikalischen Polymerisationen benötigt. Ungewollt ausgelöste radikalische Polymerisationen können z.B. bei der Lagerung und/oder beim Transport von Monomere enthaltenden Substanzen auftreten, da sowohl Wärme als auch Licht oder unerwünschte Radikale eine radikalische Polymerisation von Monomeren auslösen können. Zwar versucht man solchen ungewollten radikalischen Polymerisationen üblicherweise dadurch präventiv entgegenzutreten, daß man den Monomeren geringe Mengen (in der Regel bis zu 1000 Gew.-ppm) an Inhibitoren radikalischer Polymerisationen (Radikalfänger, Polymerisationsinhibitoren) zusetzt. Deren inhibierende Wirkung darf jedoch nicht zu ausgeprägt sein, da sie sonst vor einer späteren Verwendung der Monomeren für radikalisch initiierte Polymerisationszwecke wieder abgetrennt werden müßten. Eine mäßig inhibierende Wirkung wie sie z.B. der Monomethylether des Hydrochinon (MEHQ; p-Methoxyphenol) aufweist, kann von radikalischen Polymerisationsinitiatoren jedoch normalerweise dominiert werden, weshalb MEHQ ein für Monomere besonders häufig angewandter Lager- und/oder Transportstabilisator ist. Die Erfahrung hat jedoch gezeigt, daß selbst bei mit Lager- und/oder Transportstabilisatoren stabilisierten Monomeren eine ungewollte radikalische Polymerisation derselben nicht völlig ausgeschlossen werden kann. Letzteres gilt insbesondere dann, wenn es sich bei den Monomeren um die radikalisch besonders polymerisationsfreudigen (Meth)acrylmonomeren und/oder Styrol handelt.

Unter dem Begriff (Meth)acrylmonomere sollen hier Substanzen verstanden werden, die aus Acrolein, Methacrolein, Acrylsäure, Methacrylsäure und/oder aus Estem der beiden vorgenannten Säuren bestehen. (Meth)acryl wird in dieser Schrift generell als verkürzte Schreibweise für Acryl - und/oder Methacryl - verwendet.

Vor allem Substanzen, die zu wenigstens 90 Gew.-% aus (Meth)acrylmonomeren und/oder Styrol bestehen, sind bezüglich einer ungewollten radikalischen Polymerisation gefährdet (dies gilt auch bei präventivem Polymerisationsinhibitorzusatz). Dies trifft vor allem dann zu, wenn solche Substanzen beim Transport und/oder bei der Lagerung extremen äußeren Bedingungen ausgesetzt sind (z.B. extrem hohen Temperaturen beim Transport via Schiff über verschiedene Klimazonen hinweg (z.B. über den Äquator), wie es z.B. beim Transport von Europa nach Südostasien der Fall ist, oder extrem tiefen Temperaturen wie bei der Lagerung in außenliegenden Tanks in nordischen Ländern). Insbesondere tiefe Temperaturen sind nicht unbedenklich, können sie doch in Extremfällen zur partiellen oder vollständigen Kristallisation der Monomeren führen. Letzteres bedingt normalerweise eine Entmischung von Monomeren und Stabilisator ("kristallisative Reinigung"), was dazu führen kann, daß bei einem späteren Schmelzen für eine gewisse Zeitdauer nichtstabilisierte Bezirke von Monomeren vorliegen, von denen mit erhöhter Wahrscheinlichkeit eine ungewollte radikalische Polymerisation ausgehen kann.

Für einen sicheren Transport und/oder eine sichere Lagerung von Monomere enthaltenden Substanzen bedarf es daher eines Verfahrens, das in der Lage ist, eine ungewollt ausgelöste radikalische Polymerisation der Monomeren möglichst rasch zu beenden. Ein solches Verfahren wird aber auch benötigt, um außer Kontrolle geratene gewollte radikalische Polymerisationen unmittelbar stoppen zu können.

Die bisher bekannten Verfahren, die die Zugabe einer bekannten Inhibitorlösung vorsehen, sind bei tiefen Temperaturen infolge der Kristallisation der Inhibitorlösung sehr unzuverlässig.

Aufgabe der vorliegenden Erfindung war es daher, ein Verfahren zur Sofortbeendigung von radikalischen Polymerisationen anzugeben, das auch bei Temperaturen unterhalb 0°C anwendbar ist.

Die Erfindung geht aus von einem Verfahren zur Sofortbeendigung von radikalischen Polymerisationen, umfassend den Zusatz einer Inhibitorlösung, die Phenothiazin und mindestens 50 % (w/w) N-Alkylpyrrolidon - bezogen auf das Gewicht der Inhibitorlösung - enthält, zu einem radikalisch polymerisierenden System.
Die erfindungsgemäße Lösung der Aufgabe ist dadurch gekennzeichnet, daß die Inhibitorlösung außerdem p-Methoxyphenol (MEHQ) enthält.

Die Vorteilhaftigkeit des erfindungsgemäßen Verfahrens stellt sich als Ergebnis intensiver und ausgedehnter Forschungstätigkeit wie folgt dar:
- Gegenüber der Empfehlung der EP-B 64628 sowie der EP-A 200181 zur Sofortbeendigung einer radikalischen Polymerisation eine Polymerisationsinhibitorlösung auf der Grundlage von Hydrochinon oder Butylbrenzkatechin oder Abkömmlingen davon zuzusetzen, enthält die erfindungsgemäß zuzusetzende Inhibitorlösung mit Phenothiazin einen wesentlichen effizienter und breiter anwendbaren radikalischen Polymerisationsinhibitor;
- Gegenüber der Empfehlung in Res. Dicl. 1989, 300, 245 (Eng.), zur Sofortbeendigung einer ungewollten radikalischen Polymerisation von Acrylsäure eine wäßrige Cu(II)-Salz-Lösung zuzusetzen, sind Inhibitorlösungen auf der Grundlage von N-Alkylpyrrolidon in der Regel einerseits sowohl mit wäßrigen, als auch mit nichtwäßrigen Systemen mischbar und andererseits im Nachhinein von solchen Systemen auch wieder leicht abtrennbar;
- In Process Saf. Prog. (1993), 12(2), 111-4, wird zwar empfohlen, zur Sofortbeendigung einer ungewollten radikalischen Polymerisation von Acrylsäure selbiger eine Inhibitorlösung auf der Grundlage von Phenothiazin zuzusetzen, doch enthält dieser Stand der Technik keinen Hinweis darauf, das Phenothiazin in einem hauptsächlich aus N-Alkylpyrrolidon bestehenden Lösungsmittel gelöst befindlich zuzusetzen.
- In PCT/EP98/06814 vom 27. Oktober 1998 beschreibt ein Verfahren zur Sofortbeendigung von radikalischen Polymerisationen, umfassend den Zusatz einer Inhibitorlösung, die Phenothiazin und mindestens 50 % (w/w) N-Alkylpyrrolidon enthält, zu einem radikalisch polymerisierenden System. Die resultierende Inhibitorlösung kristallisiert jedoch nahe 0°C. Es wird nicht: erwähnt, daß ein Zusatz von p-Methoxyphenol (MEHQ) zur Inhibitorlösung vorteilhaft wäre. Durch Zusatz von MEHQ zur Inhibitorlösung wird aber der Kristallisationspunkt der Inhibitorlösung drastisch erniedrigt, so daß die Inhibitorlösung nun auch bei Temperaturen unterhalb 0°C zuverlässig anwendbar ist.

Die kristallisationshemmenden Eigenschaften von MEHQ sind in diesem Ausmaß völlig überraschend. Bisher wurde MEHQ nur als Lager- und/oder Transportstabilisator den radikalisch polymerisierbaren Monomeren zugesetzt.

Weitere Vorteile der erfindungsgemäßen Verfahrensweise bestehen darin, daß sich N-Alkylpyrrolidone gegenüber den meisten Substanzen inert verhalten. Ferner liegt der Siedepunkt von N-Alkylpyrrolidonen oberhalb des Siedepunktes der meisten Monomeren, was eine nachträgliche Trennung von den Monomeren erleichtert und eine spätere Weiterverwendung des Monomeren ermöglicht. Weiterhin verhindert der hohe Siedepunkt der N-Alkylpyrrolidone die Ausbildung explosiver Dampf-/Sauerstoffgemische in heißen Klimazonen. Auch weisen N-Alkylpyrrolidone in der Regel einen tief liegenden Schmelzpunkt auf, was auch in nordischen Ländern ihre Anwendung ermöglicht. Von Vorteil ist zusätzlich der niedrige Flammpunkt von N-Alkylpyrrolidonen sowie ihre allenfalls geringe Toxizität. Ganz besonders vorteilhaft für das erfindungsgemäße Verfahren ist jedoch, daß Phenothiazin bei Normaltemperatur (25°C) in N-Alkylpyrrolidon eine erhöhte Löslichkeit aufweist. Dies ermöglicht die erfindungsgemäße Anwendung von Phenothiazinlösungen mit erhöhtem Phenothiazingehalt ohne das Risiko, daß mit einer Änderung der Außentemperatur unmittelbar eine partielle oder vollständige Ausfällung des Phenothiazins aus der Lösung einhergeht.

Eine Zugabe von Phenothiazin in Substanz zur Sofortbeendigung von radikalischen Polymerisationen ist insofern von Nachteil, als der in Substanz gegebene geringe Zerteilungsgrad des Phenothiazins der angestrebten Sofortbeendigung nicht angemessen ist.

Erfindungsgemäß bevorzugte N-Alkylpyrrolidone sind jene, deren Alkylgruppe ein bis acht C-Atome aufweist. Besonders bevorzugt sind unter diesen diejenigen N-Alkylpyrrolidone, deren Alkylgruppe ein bis sechs C-Atome aufweist. Ganz besonders bevorzugte N-Alkylpyrrolidone sind das N-Methylpyrrolidon und das N-Ethylpyrrolidon.

Neben N-Alkylpyrrolidonen kann die erfindungsgemäß zuzusetzende Phenothiazinlösung auch noch andere Lösungsmittel enthalten. Als solche kommen alle diejenigen in Betracht, die mit N-Alkylpyrrolidonen mischbar sind. Beispielhaft genannt seien als solche Lösungsmittel Diphenyl, Diphenylether, Toluol, Xylol, Phthalsäuredimethylester, Butylacetat oder 2-Ethylhexylacetat. Ferner kommen als solche anderen Lösungsmittel N,N-Dialkylcarbonsäureamide in Betracht, deren Alkylgruppen bevorzugt ein bis acht C-Atome aufweisen. Besonders günstige Alkylgruppen sind die Methyl-, die Ethyl- und die n-Butylgruppe. Ferner sind N,N-Dialkylcarbonsäureamide von C₁-bis C₃-Alkancarbonsäuren besonders vorteilhaft. Erfindungsgemäß besonders günstige N,N-Dialkylcarbonsäureamide sind das N,N-Dimethylformamid und das N,N-Dimethylacetamid.

Bevorzugt besteht das Lösungsmittel der erfindungsgemäß zuzusetzenden Phenothiazinlösung zu wenigstens 75 % seines Gewichtes, besonders bevorzugt zu wenigstens 85 % seines Gewichtes und ganz besonders bevorzugt zu wenigstens 95 % seines Gewichtes aus N-Alkylpyrrolidon. Erfindungsgemäß zweckmäßig besteht das Lösungsmittel der Phenothiazinlösung ausschließlich aus N-Alkylpyrrolidon, insbesondere ausschließlich aus N-Methylpyrrolidon oder ausschließlich aus N-Ethylpyrrolidon.

Neben Phenothiazin und MEHQ kann die erfindungsgemäß zuzusetzende Inhibitorlösung auch noch andere Polymerisationsinhibitoren enthalten. Als solche seien beispielhaft aufgeführt Hydrochinon, Diphenylamin, p-Phenylendiamine, Nitroxyl-Radikale (Verbindungen, die wenigstens eine >N-O-Gruppe aufweisen), Verbindungen, die eine Nitroso-Gruppe, d.h., eine Atomgruppierung -N=O, aufweisen, und Hydroxylamine.

Als erfindungsgemäß geeignete Nitroxyl-Radikale (auch als N-Oxyl-Radikale bezeichnet) kommen insbesondere diejenigen in Betracht, die sich von einem sekundären Amin ableiten, welches keine Wasserstoffatome an den a-C-Atomen trägt (d.h., die N-Oxyl-Gruppen leiten sich von entsprechenden sekundären Aminogruppen ab). Unter diesen eignen sich vor allem jene N-Oxyl-Radikale, die in der EP-A 135280, der älteren Anmeldung DE-A 19651307, derUS-A 5,322,912, der US-A 5,412,047, der US-A 4,581,429, der DE-A 1618141, der CN-A 1052847, der US-A 4,670,131, der US-A 5,322,960, der älteren Anmeldung DE-A 19602539, der EP-A 765856 und der JP-A 5/320217 genannt sind.

Solche geeigneten, sich von einem sekundären Amin ableitenden, stabilen N-Oxyl-Radikale sind z.B. jene der allgemeinen Formel I 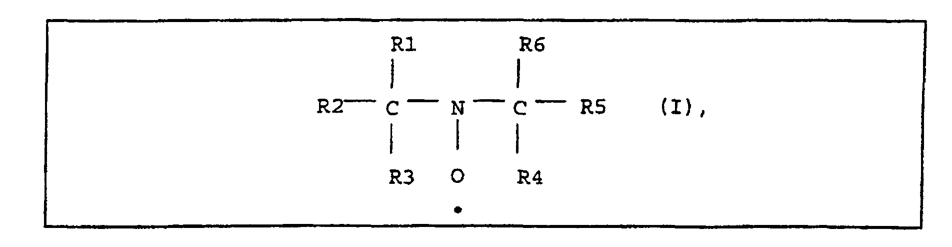 mit
- R¹,R²,R⁵ und R⁶ =: dieselben oder verschiedene gerad- oder verzweigtkettige, gegebenenfalls substituierte Alkylgruppen und
- R³ und R⁴ =: dieselben oder verschiedene gerad- oder verzweigtkettige, gegebenenfalls substituierte Alkylgruppen oder
- R³CNCR⁴ =: eine, gegebenenfalls substituierte, zyklische Struktur.

Als erfindungsgemäß geeignete Verbindungen I kommen insbesondere jene in Betracht, die in der EP-A 135 280, der älteren Anmeldung DE-A 19651307, der US-A 5,322,912, der US-A 5,412,047, der US-A 4,581,429, der DE-A 16 18 141, CN-A 1052847, US-A 4,670,131, US-A 5,322,960 sowie der älteren Anmeldung DE-A 19602539 genannt sind.

Beispiele dafür sind jene stabilen N-Oxyl-Radikale der allgemeinen Formel I, bei welchen R¹, R², R⁵ und R⁶ für (gleiche oder verschiedene) C₁- bis C₄-Alkylgruppen wie Methyl-, Ethyl-, n-Propyl-,iso-Propyl-, n-Butyl-, iso-Butyloder tert.-Butyl-, lineares oder verzweigtes Pentyl-, Phenyl- oder substituierte Gruppen hiervon und R³ und R⁴ für (gleiche oder verschiedene) C₁- bis C₄-Alkylgruppen wie Methyl-, Ethyl-, n-Propyl-, iso-Propyl-, n-Butyl-, iso-Butyl- oder tert.-Butyl-, lineares oder verzweigtes Pentyl-, substituierte Gruppen hiervon oder gemeinsam mit CNC die zyklische Struktur 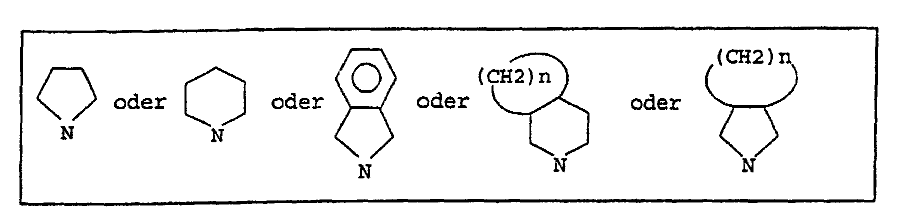 mit n gleich einer ganzen Zahl von 1 bis 10 (häufig 1 bis 6), einschließlich substituierter derartiger zyklischer Strukturen, stehen. Als beispielhafte Vertreter seien 2,2,6,6-Tetramethyl-1-oxyl-piperidin, 2,2,5,5-Tetramethyl-l-oxylpyrrolidin und 4-Oxo-2,2,6,6-tetramethyl-1-oxyl-piperidin genannt.

Die N-Oxyl-Radikale I lassen sich aus den entsprechenden sekundären Aminen durch Oxidation, z.B. mit Wasserstoffperoxid, herstellen. In der Regel sind sie als Reinsubstanz darstellbar.

Zu den erfindungsgemäß geeigneten N-Oxyl-Radikalen I zählen insbesondere piperidin- oder pyrrolidin-N-Oxyle und Di-N-Oxyle der nachstehenden allgemeinen Formeln II bis IX: 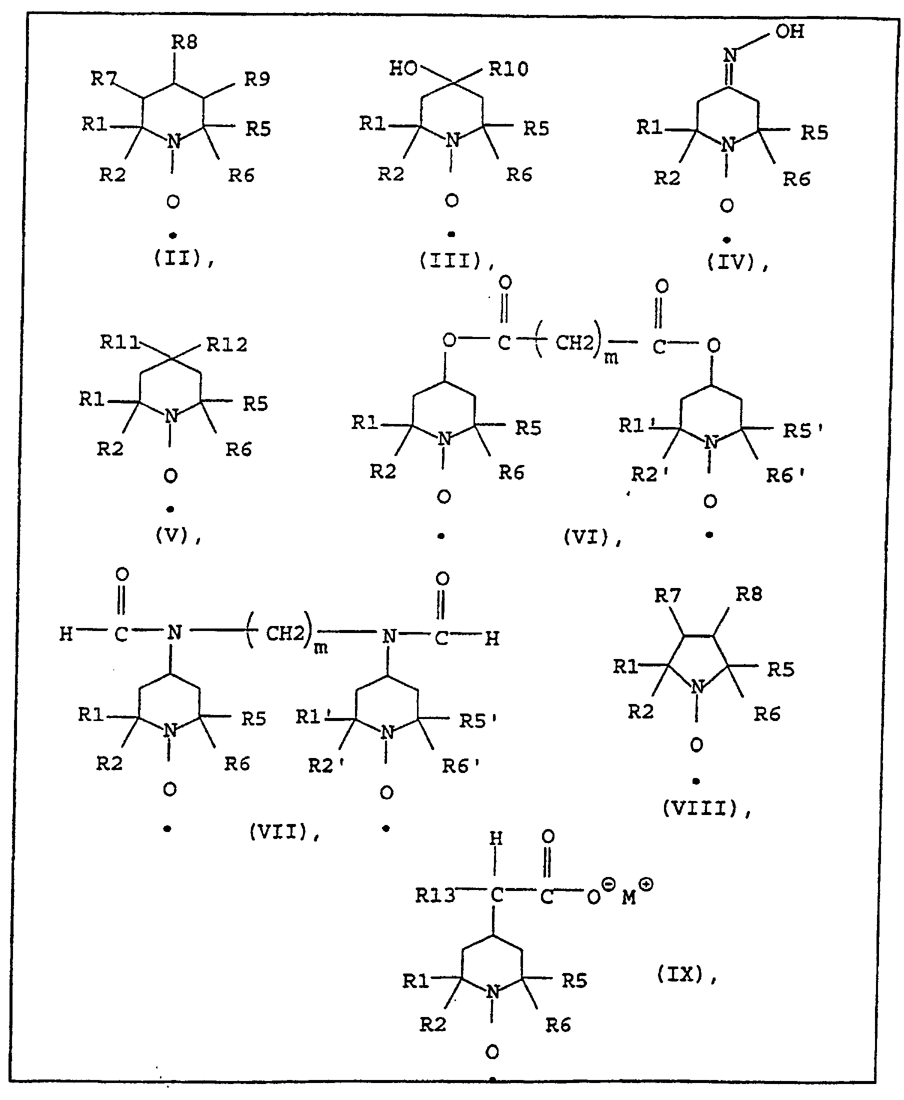 mit
- m =: 2 bis 10,
- R⁷,R⁸,R⁹ =: unabhängig voneinander 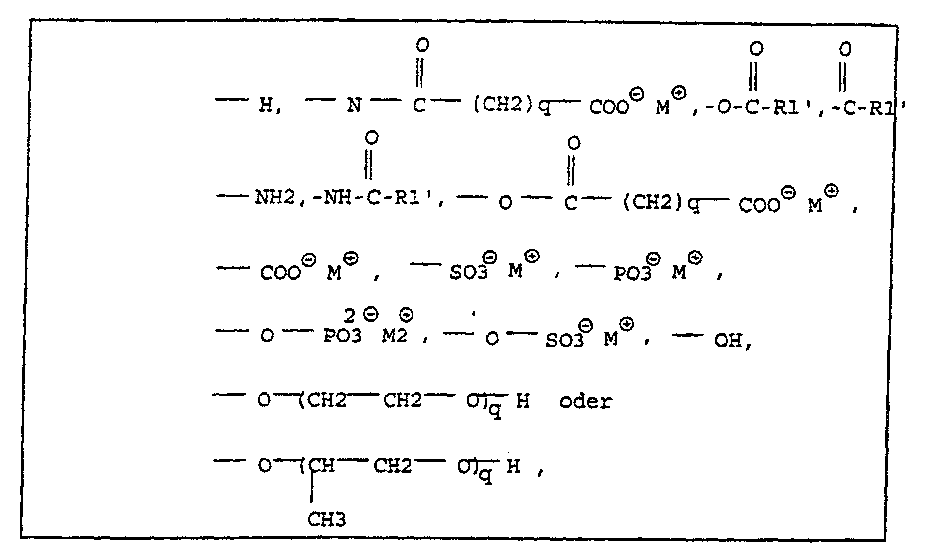
- M^{⊕}=: ein Wasserstoff- oder ein Alkalimetallion,
- q =: eine ganze Zahl von 1 bis 10,
- R^{1,},R^{2,},R^{5,},R^{6,} =: unabhängig voneinander und unabhängig von R¹, R², R⁵, R⁶ dieselben Gruppen wie R¹,
- R¹⁰ =: C₁- bis C₄-Alkyl, -CH=CH₂, -C≡CH, -CN, 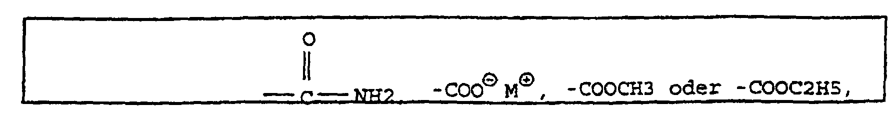
- R¹¹ =: ein organischer Rest, der wenigstens eine primäre, sekundäre (z.B. -NHR¹) oder tertiäre Aminogruppe (z.B. -NR¹R²) oder wenigstens eine Ammoniumgruppe -N^{⊕}R¹⁴R¹⁵R¹⁶X^{⊖} aufweist, mit X^{⊖} = F^{⊖}, Cl^{⊖}, Br^{⊖}, HSO₄^{⊖}, SO₄^{2^{⊖}}, H₂PO₄^{⊖}, HPO₄^{2^{⊖}} oder PO₄^{3^{⊖}} und R¹⁴, R¹⁵, R¹⁶ voneinander unabhängige organische Reste (z.B. unabhängig voneinander und unabhängig von R¹ dieselben Gruppen wie R¹),
- R¹² =: unabhängig von R¹¹ dieselben Gruppen wie R¹¹ oder -H, -OH, C₁- bis C₄-Alkyl, -COO^{⊖}M^{⊕}, -C≡CH, 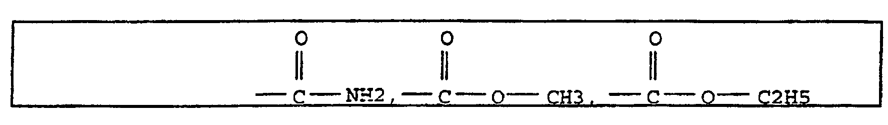 oder hydroxysubstituiertes C₁- bis C₄-Alkyl (z.B. hydroxyethyl oder hydroxypropyl) oder
- R¹¹, R¹² =: gemeinsam den Sauerstoff einer Carbonylgruppe und

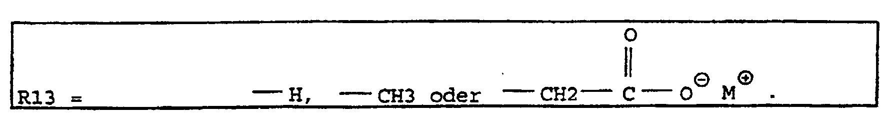

Vorzugsweise ist R¹ = R² = R⁵ = R⁶ = R^{1'} = R^{2'} = R^{5'} = R^{6'} = -CH₃.

Als beispielhafte Vertreter erfindungsgemäß geeigneter N-Oxyl-Radikale seien 4-Hydroxy-2,2,6,6-tetramethyl-1-oxyl-piperidin, 4-Hydroxy-2,6-diphenyl-2,6-dimethyl-1-oxyl-piperidin, 4-Carboxy-2,2,6,6-tetramethyl-1-oxyl-piperidin, 4-Carboxy-2,6-diphenyl-2,6-dimethyl-1-oxyl-piperidin, 3-Carboxy-2,2,5,5-tetramethyl-1-oxyl-pyrrolidin, 3-Carboxy-2,5-diphenyl-2,5-dimethyl-1-oxyl-pyrrolidin, 4-Acetyl-2,2,6,6-tetramethyl-1-oxyl-piperidin, N,N'-Bis (1-Oxyl-2,2,6,6-tetramethylpiperidin-4-yl)-N,N'-bis formyl-1,6-diaminohexan und Bis-(1-oxyl-2,2,6,6-tetramethylpiperidin-4-yl)adipat genannt.

Die Herstellung von 3-Carboxy-2,2,5,5-tetramethyl-1-oxyl-pyrrolidin findet sich z.B. in Romanelli, M.; Ottaviani, M.F.; Martini, G.; Kevan, L., JPCH J: Phys. Chem., EN, 93, 1, 1989, S. 317-322.

Die Verbindungen (VI) und (VII) können gemäß US-A 4665185 (z.B. Bsp. 7) sowie DE-A 19510184 erhalten werden.

Weitere geeignete beispielhafte Vertreter sind:

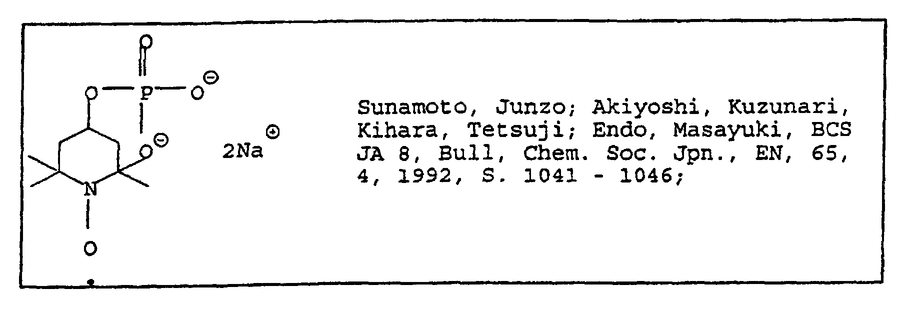

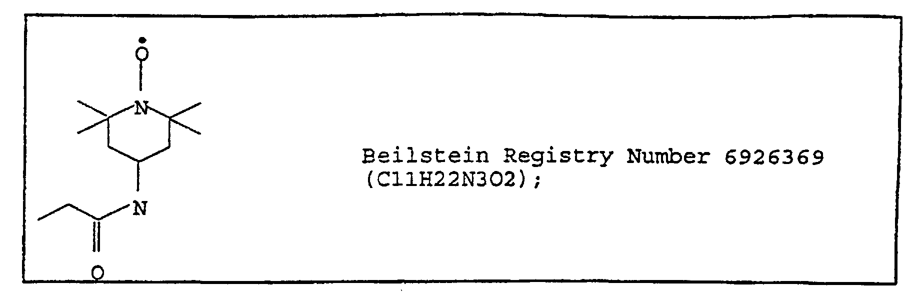

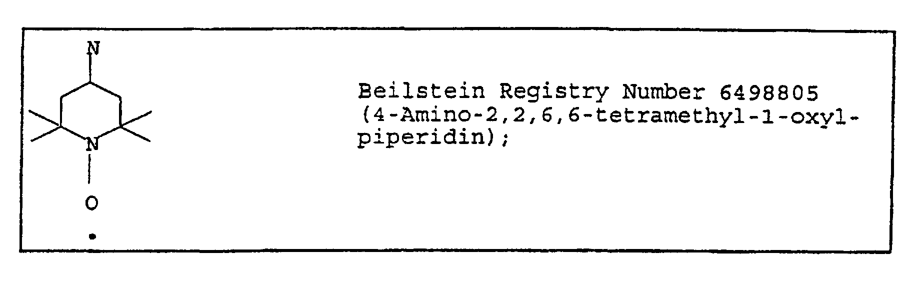

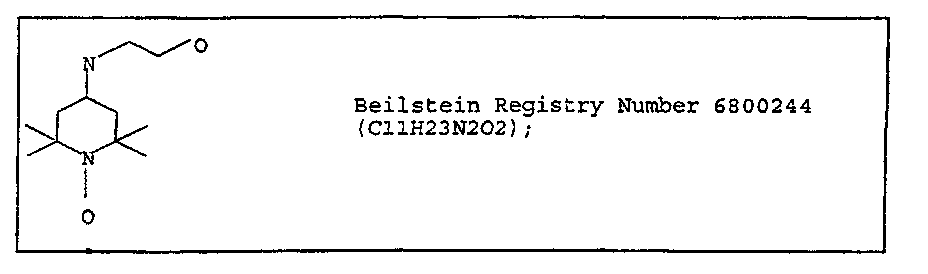

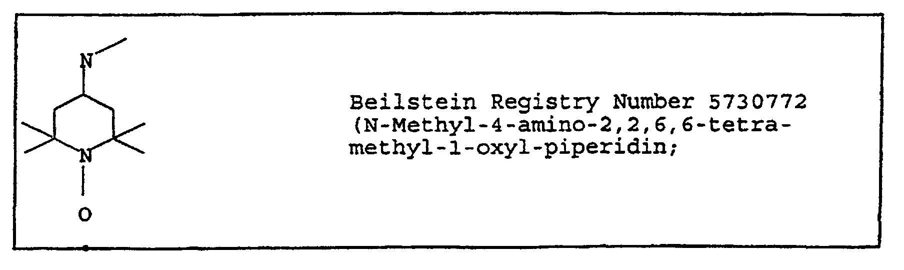

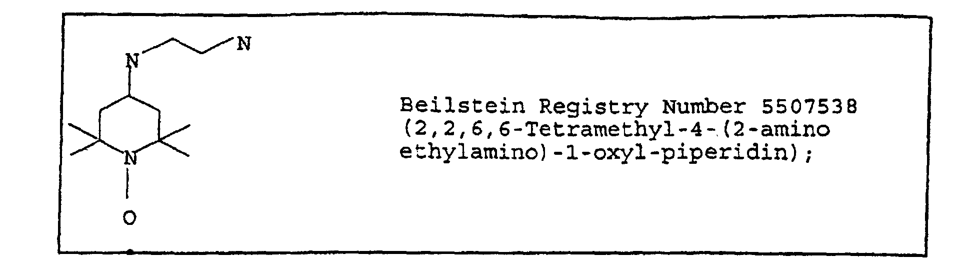

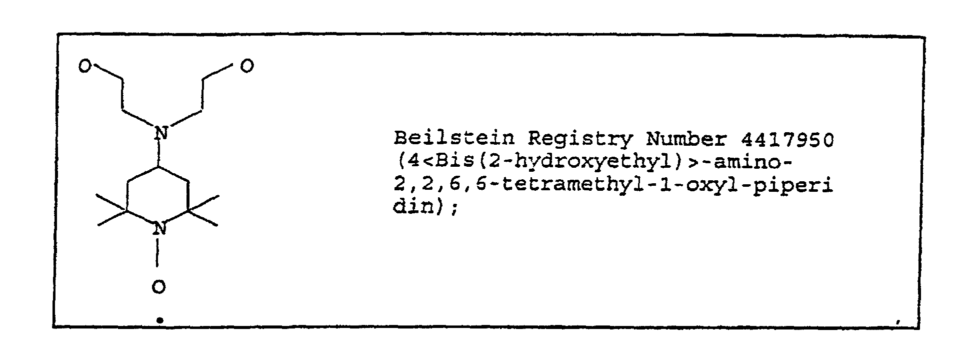

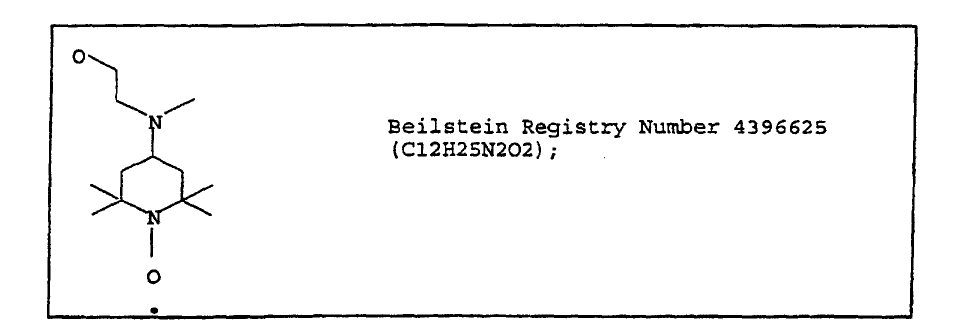

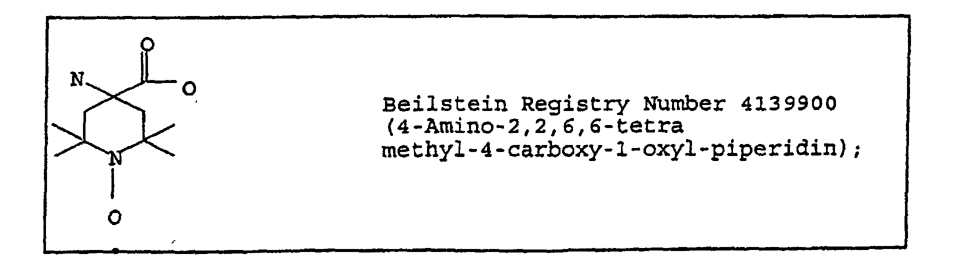

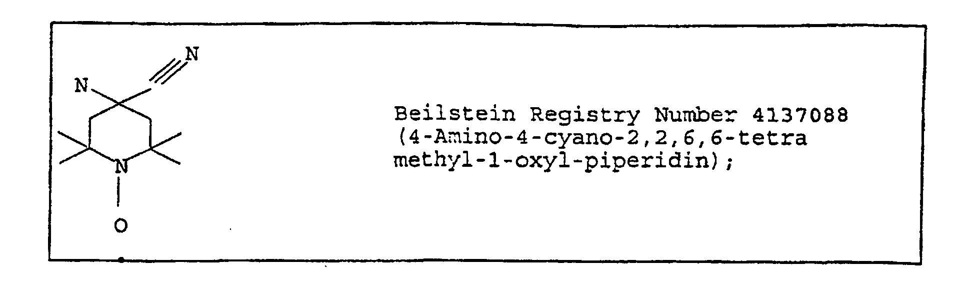

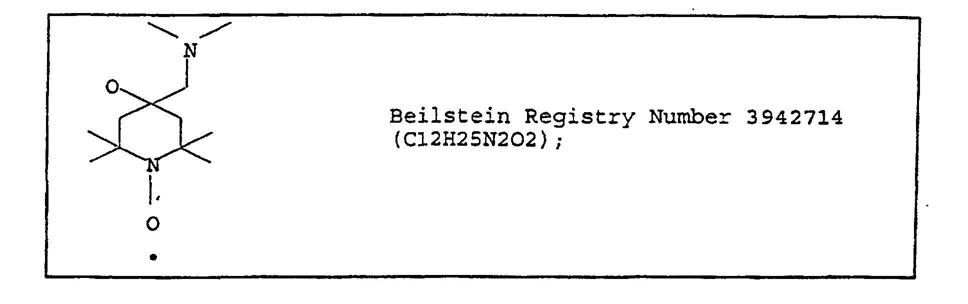

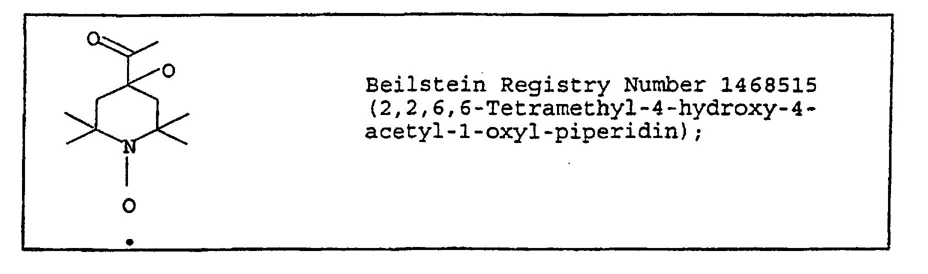

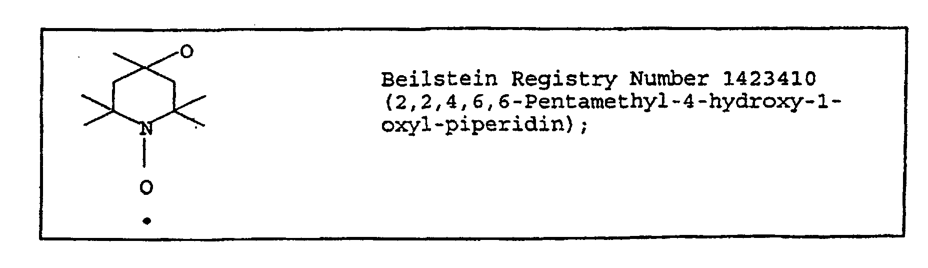

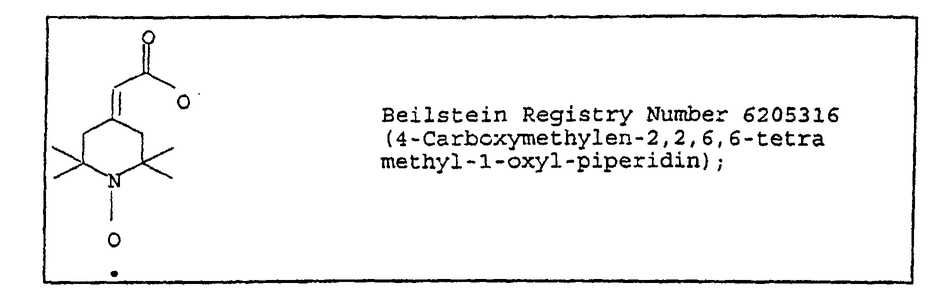

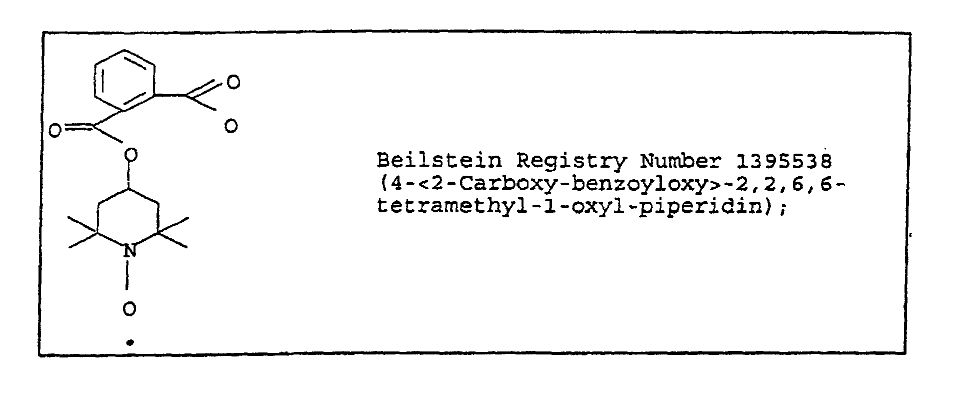

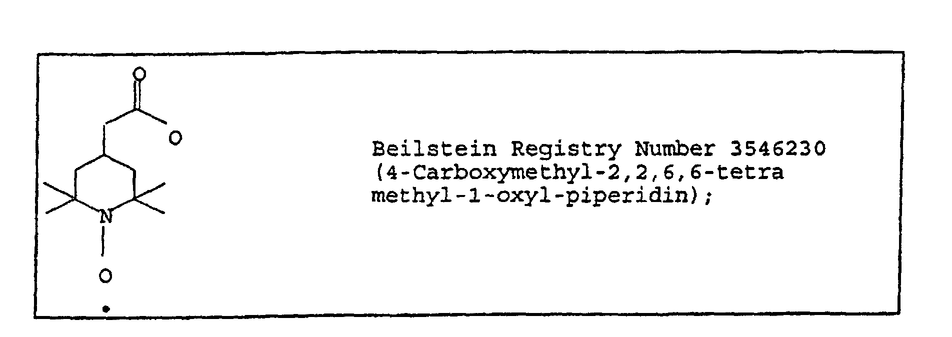

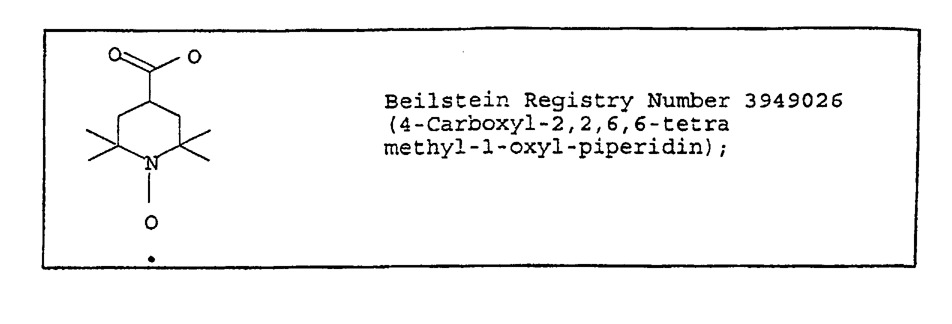

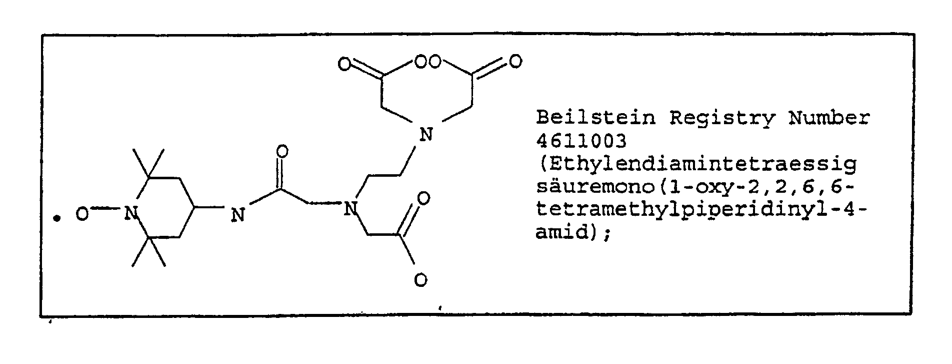

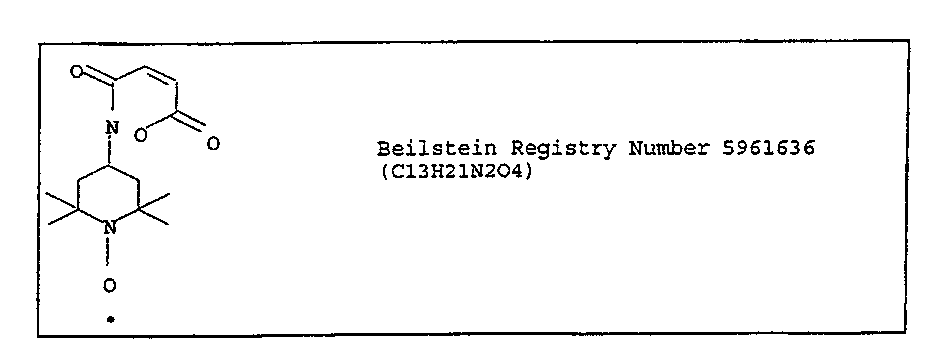

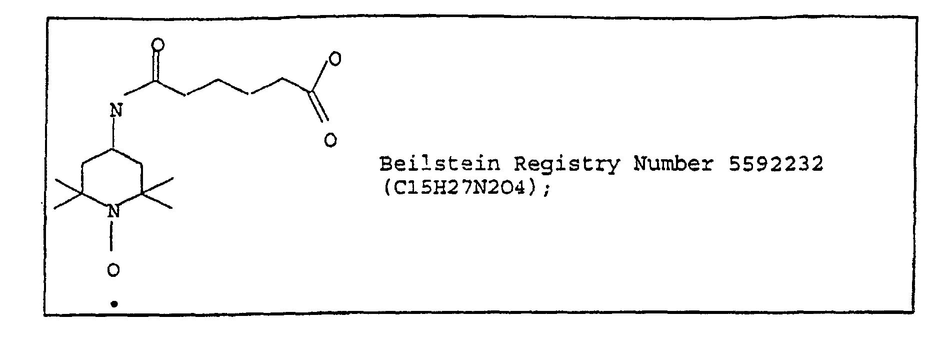

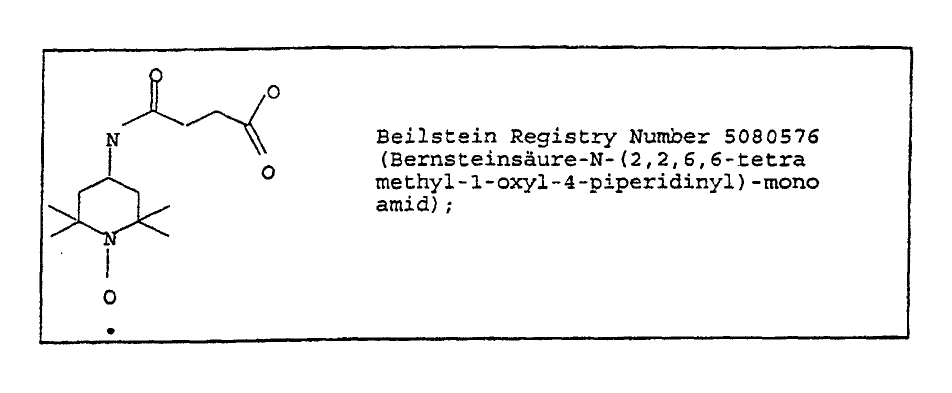

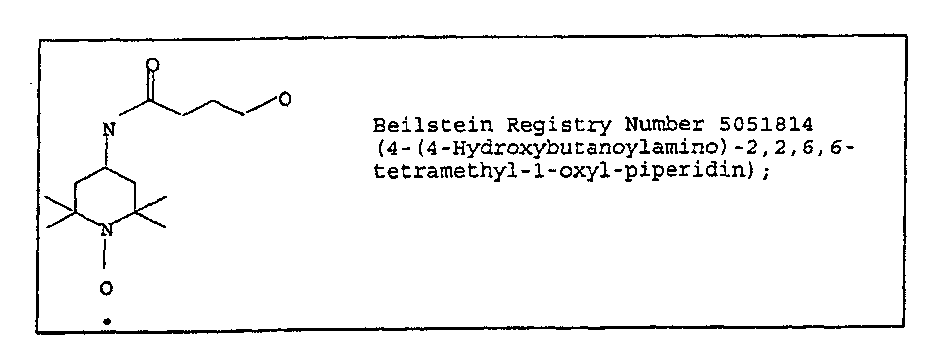

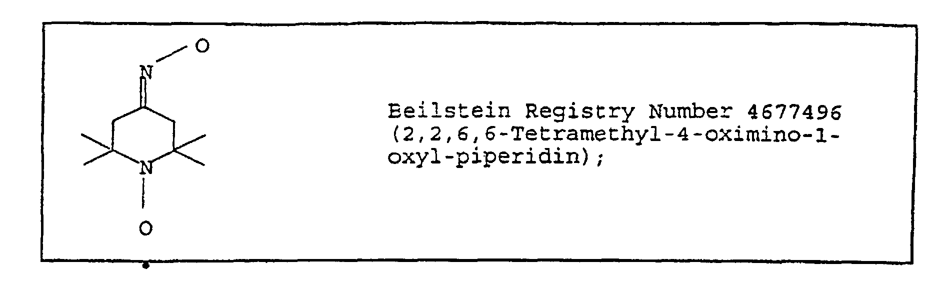

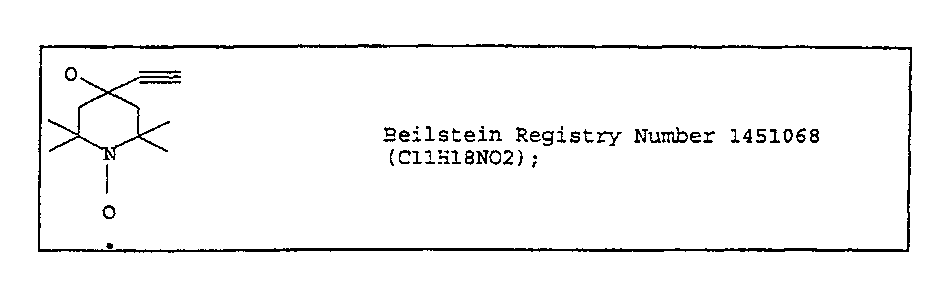

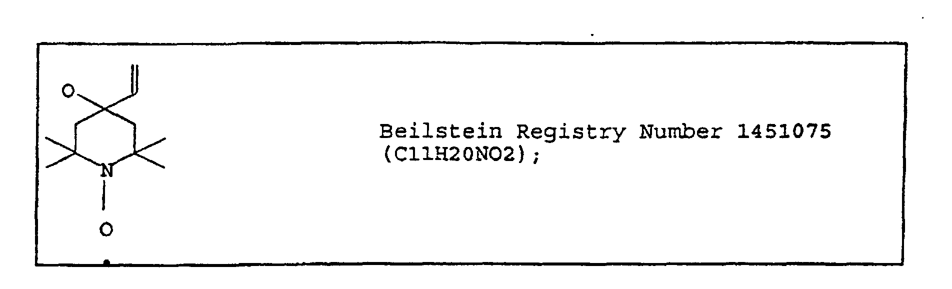

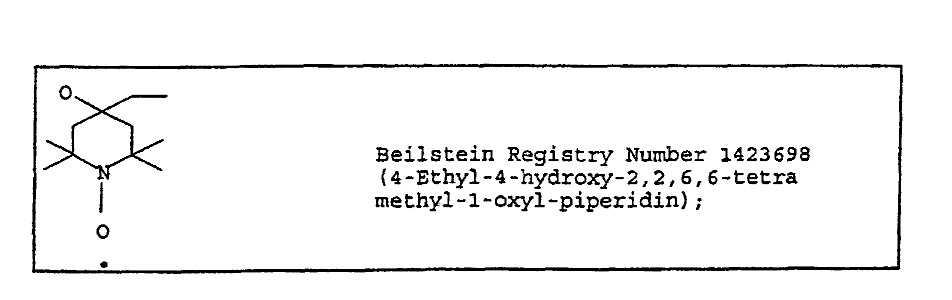

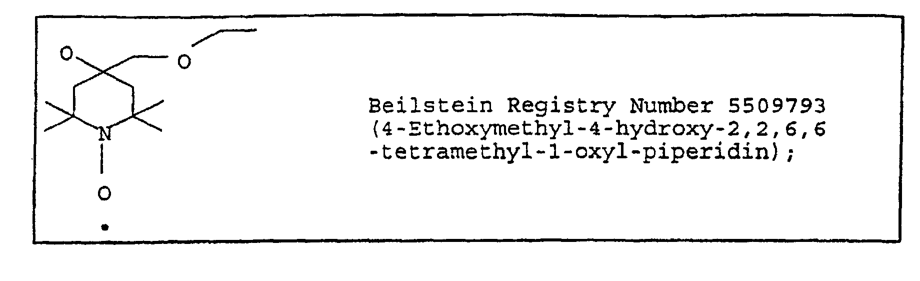

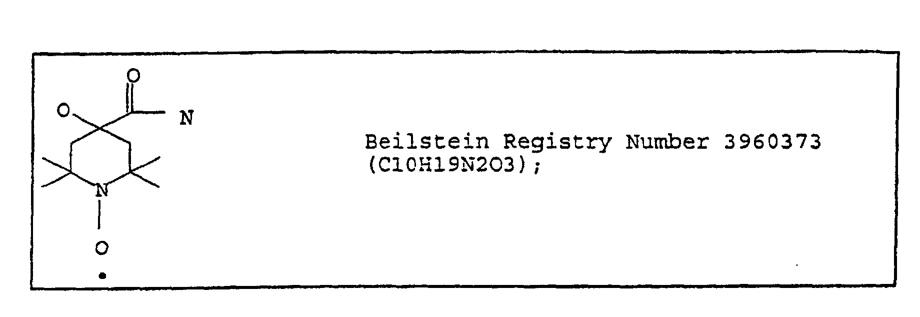

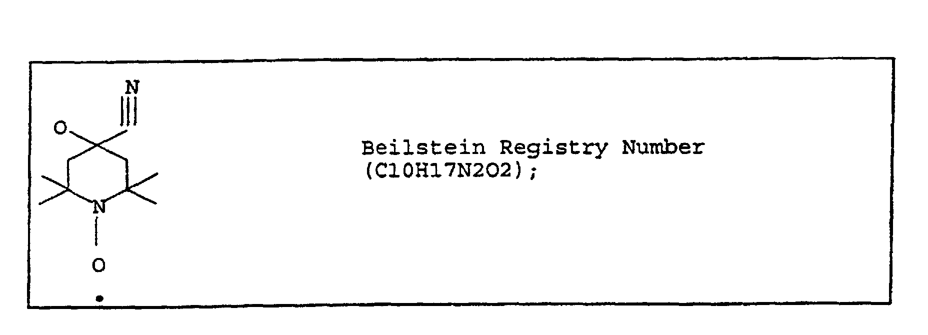

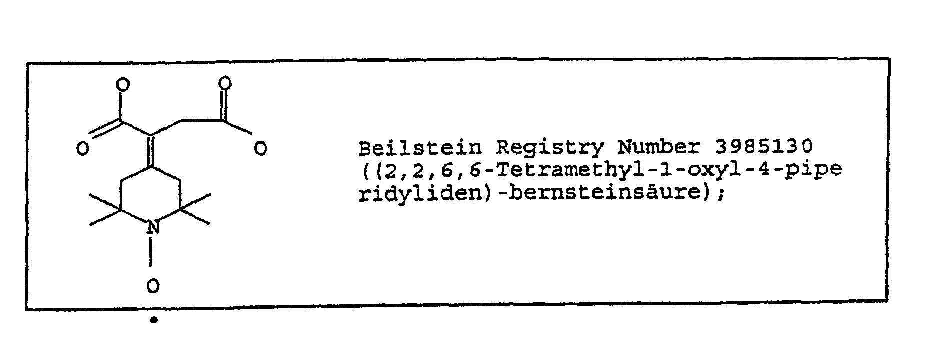

Selbstverständlich können erfindungsgemäß auch Gemische von N-Oxyl-Radikalen neben Phenothiazin angewendet werden.

Erfindungsgemäß geeignete organische Nitrosoverbindungen sind z.B. N-Nitrosoarylamine oder die Nitrosogruppe unmittelbar an ein Kohlenstoffatom eines aromatischen Kerns gebunden aufweisende Nitrosoverbindungen. Beispielhaft genannt seien Nitrosophenole wie 4-Nitrosophenol, Nitrosonaphthole wie 2-Nitroso-1-naphthol, Nitrosobenzol, N-Nitroso-N-methylharnstoff, Nitroso-N,N-Dialkylaniline mit Alkyl = Methyl, Ethyl, Propyl und/oder Butyl, N-Nitrosodiphenylamin, N-Nitrosophenylnaphthylamin, 4-Nitrosodinaphthylamin und p-Nitrosodiphenylamin. Selbstverständlich können erfindungsgemäß auch Gemische von vorgenannten Nitrosoverbindungen neben Phenothiazin eingesetzt werden.

Erfindungsgemäß geeignete p-Phenylendiamine sind solche der allgemeine Formel X 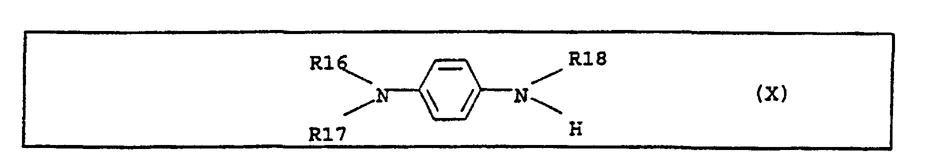 mit
- R¹⁶, R¹⁷, R¹⁸=: unabhängig voneinander Alkyl, Aryl, Alkaryl oder Aralkyl mit bis zu 20 C-Atomen, oder Wasserstoff.

Insbesondere eignen sich Verbindungen X mit R¹⁶, R¹⁷, R¹⁸= unabhängig voneinander Methyl, Ethyl, Propyl, iso-Propyl, iso-Butyl, sek.-Butyl, n-Butyl, Pentyl, Phenyl oder Naphthyl. Als Beispiele für geeignete Verbindungen X seien genannt: N,N'-Bis-sek.butyl-p-phenylendiamin, N-Phenyl-N'-isopropylphenylendiamin, N-Naphthyl-N'-sek-butyl-p-phenylendiamin, N,N,N'-Trimethyl-p-phenylendiamin, N,N,N' -Triethyl-p-phenylendiamin, N,N-Dimethyl-p-phenylendiamin, N,N-Diethyl-p-phenylendiamin, N-Phenyl-N',N'-dimethyl-p-phenylendiamin, N-Phenyl-N',N'-diethyl-p-phenylendiamin, N-Phenyl-N',N'-dipropyl-p-phenylendiamin, N-Phenyl-N',N'-di-nbutyl-p-phenylendiamin, N-Phenyl-N',N'-di-sek.-butyl-p-phenylendiamin, N-Phenyl-N'-methyl-N'-ethyl-p-phenylendiamin, N-Phenyl-N'-methyl-N'propyl-p-phenylendiamin, N-Phenyl-N'-methyl-p-phenylendiamin, N-Phenyl-N'-ethyl-p-phenylendiamin, N-Phenyl-N'-propyl-p-phenylendiamin, N-Phenyl-N'-isopropyl-p-phenylendiamin,N-Phenyl-N'-butyl-p-phenylendiamin, N-Phenyl-N'-isobutyl-p-phenylendiamin, N-Phenyl-N'-sek-butyl-pphenylendiamin, N-Phenyl-N'-tert.-butyl-p-phenylendiamin, N-Phenyl-N'-npentyl-p-phenylendiamin, N-Phenyl-N'-n-hexyl-p-phenylendiamin, N-Phenyl-N'-( 1-methylhexyl)-p-phenylendiamin, N-Phenyl-N'-(1,3-dimethylbutyl)-p-phenylendiamin, N-Phenyl-N'-(1,4-dimethylpentyl)-p-phenylendiamin und p-Phenylendiamin.
Selbstverständlich können erfindungsgemäß auch Gemische von p-Phenylendiaminen neben Phenothiazin eingesetzt werden. Als solche Gemische kommen insbesondere die in der WO 92/01665 empfohlenen p-Phenylendiamingemische in Betracht.

Natürlich können erfindungsgemäß auch Gemische aller verschiedenen vorgenannten Polymerisationsinhibitoren neben Phenothiazin und MEHQ eingesetzt werden.

Erfindungsgemäß bevorzugt sind solche Phenothiazinlösungen, deren Gesamtgehalt an Polymerisationsinhibitor zu wenigstens 50 Gew.-%, besonders bevorzugt zu wenigstens 75 Gew.-% und ganz besonders bevorzugt zu wenigstens 90 Gew.-% aus Phenothiazin besteht. Mit besonderem Vorteil ist neben Phenothiazin und MEHQ kein weiterer Polymerisationsinhibitor in der erfindungsgemäß zuzusetzenden Inhibitorlösung enthalten. MEHQ wirkt in der Inhibitorlösung kaum als Inhibitor.
In der Regel wird der Gehalt an Phenothiazin in den erfindungsgemäß zuzusetzenden Inhibitorlösungen, bezogen auf die Lösung, mindestens 10 % (w/w), vorzugsweise mindestens 20 % (w/w), besonders bevorzugt mindestens 30 % (w/w), betragen.
Mit Vorteil wird erfindungsgemäß eine Lösung von Phenothiazin in Methylpyrrolidon bevorzugt, deren Gehalt an Phenothiazin zweckmäßigerweise, auf die Lösung bezogen, 30 bis 45 % beträgt. Häufig wird der Phenothiazingehalt der vorgenannten Lösung 35 % (w/w) betragen.
Der Gehalt der Inhibitorlösung an dem kristallisationshemmenden MEHQ beträgt vorzugweise 2,5 bis 12,5 % (w/w), insbesondere 5 bis 10 % (w/w) bezogen auf das Gewicht der Inhibitorlösung.
In besonders bevorzugten Ausführungsformen der Erfindung umfaßt die Inhibitorlösung 35 % Phenothiazin, 5 % MEHQ und 60 % N-Methylpyrrolidon oder 30 % Phenothiazin, 10 % MEHQ und 60 % N-Methylpyrrolidon (jeweils w/w).

Das erfindungsgemäße Verfahren eignet sich zur Sofortbeendigung jedweder Art radikalischer Polymerisationen auch unterhalb von 0°C, insbesondere derjenigen ungewollten und/oder außer Kontrolle geratenen radikalischen Polymerisationen, die eingangs dieser Schrift genannt wurden.

Zu diesen sind vor allem die ungewollten radikalischen Polymerisationen von solchen Substanzen zu zählen, die zu wenigstens 90 Gew.-% oder zu wenigstens 98 Gew.-% oder zu wenigstens 99 Gew.-% oder zu 100 Gew.-% aus (Meth)acrylmonomeren bestehen. Als (Meth)acrylmonomere kommen dabei vor allem (Meth)acrylsäure und Ester aus (Meth)acrylsäure und ein- oder mehrwertigen Alkanolen in Betracht. Dies gilt insbesondere dann, wenn die einoder mehrwertigen Alkanole ein bis zwanzig C-Atome, oder ein bis zwölf C-Atome oder ein bis acht C-Atome aufweisen. Beispielhafte Vertreter solcher Ester sind z.B. Methylacrylat, Ethylacrylat, n-Butylacrylat, iso-Butylacrylat, tert.-Butylacrylat, 2-Ethylhexylacrylat, Methylmethacrylat, Ethylmethacrylat, n-Butylmethacrylat und tert.-Butylmethacrylat.

Ein weiterer Gegenstand der Erfindung ist eine Vorrichtung zu Durchführung eines erfindungsgemäßen Verfahrens.
In anwendungstechnisch zweckmäßiger Weise wird das Einbringen der erfindungsgemäß zuzusetzenden Inhibitorlösung über eine Sprühdüse vorgenommen, um eine möglichst rasche homogene Verteilung im radikalisch polymerisierenden System zu erzielen. Die in DE-A 197 49 859 und DE-A 198 22 492 beschrieben Vorrichtungen sind für das Einbringen der Inhibitorlösung in das polymerisierende System in besonderer Weise geeignet.

Selbstverständlich kann vorgenannte Homogenisierung auch durch Umpumpen und/oder Rühren unterstützt werden. Allerdings bedingen solche mechanischen Hilfsmaßnahmen auch die Gefahr einer Polymerisationsbeschleunigung, da mit ihnen gleichzeitig ein Energieeintrag in das radikalisch polymerisierende System verknüpft ist. Die einzubringende Phenothiazinlösung ist zweckmäßig in einem geeigneten Vorratsbehälter enthalten. Wird das erfindungsgemäße Verfahren zur Sofortbeendigung der radikalischen Polymerisation von ungewollt in Substanz polymerisierenden (Meth)acrylmonomeren angewendet, sollte die insgesamt zugesetzte Menge an Phenothiazin, bezogen auf die (Meth)acrylmonomeren, etwa 0,01 bis 3 Gew.-% betragen. In der Regel genügt eine zugesetzte Menge an Phenothiazin von 0,01 bis 0,05, häufig 0,025 Gew.-%.

### Beispiel

| **Zusammensetzung der Inhibitorlösung** | **Kristallisationspunkt** |
|---|---|
| 35 % (w/w) Phenothiazin | + 2 °C |
| 65 % (w/w) N-Methylpyrrolidon | |
| 35 % (w/w) Phenothiazin | - 11 °C |
| 5 % (w/w) MEHQ | |
| 60 % (w/w) N-Methylpyrrolidon | |

Aus dem Vergleich des Kristallisationspunkts einer Inhibitorlösung mit und ohne MEHQ ist ersichtlich, daß MEHQ den Kristallisationspunkt senkt und den Arbeitsbereich von 2°C auf -11°C um 13 °C ausdehnt. Die Wirkung von Phenothiazin als Polymerisationsinhibitor wird nicht beeinträchtigt.

## Patentansprüche

1. Verfahren zur Sofortbeendigung von radikalischen Polymerisationen, umfassend den Zusatz einer Inhibitorlösung, die Phenothiazin und mindestens 50 % (w/w) N-Alkylpyrrolidon - bezogen auf das Gewicht der Inhibitorlösung - enthält, zu einem radikalisch polymerisierenden System, **dadurch gekennzeichnet, daß** die Inhibitorlösung außerdem p-Methoxyphenol enthält.

2. Verfahren nach Anspruch 1, **dadurch gekennzeichnet, daß** das N-Alkylpyrrolidon N-Methylpyrrolidon und/oder N-Ethylpyrrolidon ist.

3. Verfahren nach Anspruch 1 oder 2, **dadurch gekennzeichnet, daß** der Phenothiazingehalt der Inhibitorlösung, bezogen auf das Gewicht der Inhibitorlösung, mindestens 10 % (w/w) beträgt.

4. Verfahren nach einem der Ansprüche 1 bis 3, **dadurch gekennzeichnet, daß** der p-Methoxyphenolgehalt der Inhibitorlösung, bezogen auf das Gewicht der Inhibitorlösung, 2,5 bis 12,5 % (w/w) beträgt.

5. Verfahren nach einem der Ansprüche 1 bis 4, **dadurch gekennzeichnet, daß** der p-Methoxyphenolgehalt der Inhibitorlösung, bezogen auf das Gewicht der Inhibitorlösung, 5 bis 10 % (w/w) beträgt.

6. Verfahren nach einem der Ansprüche 1 bis 5, **dadurch gekennzeichnet, daß** es sich bei dem radikalisch polymerisierenden System um in Substanz radikalisch polymerisierende (Meth)acrylmonomere handelt.

7. Verfahren nach Anspruch 6, **dadurch gekennzeichnet, daß** das (Meth)acrylmonomere (Meth)acrylsäure ist.

8. Verfahren nach Anspruch 6, **dadurch gekennzeichnet, daß** das (Meth)acrylmonomere ein (Meth)acrylsäureester ist.

9. Inhibitorlösung, enthaltend Phenothiazin, p-Methoxyphenol und ein N-Alkylpyrrolidon, zur Sofortbeendigung von radikalischen Polymerisationen.

10. Inhibitorlösung nach Anspruch 9, enthaltend Phenothiazin p-Methoxyphenol, und N-Methylpyrrolidon.

11. Inhibitorlösung nach Anspruch 10, enthaltend mindestens 10 % (w/w) Phenothiazin, 5 bis 10 % (w/w) p-Methoxyphenol und mindestens 50 % (w/w) N-Methylpyrrolidon, jeweils bezogen auf das Gewicht der Inhibitorlösung.

## Claims

1. A process for immediately terminating free radical polymerizations comprising the addition of an inhibitor solution which contains phenothiazine and at least 50% (w/w) N-alkylpyrrolidone-based on the weight of the inhibitor solution-to a system undergoing free radical polymerization, wherein the inhibitor solution also contains p-methoxyphenol.

2. A process as claimed in claim 1, wherein the N-alkylpyrrolidone is N-methylpyrrolidone or N-ethylpyrrolidone.

3. A process as claimed in claim 1 or 2, wherein the phenothiazine content of the inhibitor solution is at least 10% (w/w) based on the weight of the inhibitor solution.

4. A process as claimed in any of claims 1 to 3, wherein the p-methoxyphenol content of the inhibitor solution is from 2.5 to 12.5% (w/w), based on the weight of the inhibitor solution.

5. A process as claimed in any of claims 1 to 4, wherein the p-methoxyphenol content of the inhibitor solution is from 5 to 10% (w/w), based on the weight of the inhibitor solution.

6. A process as claimed in any of claims 1 to 5, wherein the system undergoing free radical polymerization comprises (meth)acrylic monomers undergoing free radical mass polymerization.

7. A process as claimed in claim 6, wherein the (meth)acrylic monomer is (meth)acrylic acid.

8. A process as claimed in claim 6, wherein the (meth)acrylic monomer is a (meth)acrylic ester.

9. An inhibitor solution containing phenothiazine, p-methoxyphenol and an N-alkylpyrrolidone, for immediately terminating free radical polymerizations.

10. An inhibitor solution as claimed in claim 9, containing phenothiazine, p-methoxyphenol and N-methylpyrrolidone.

11. An inhibitor solution as claimed in claim 10, containing at least 10% (w/w) phenothiazine, from 5 to 10% (w/w) p-methoxyphenol and at least 50% (w/w) N-methylpyrrolidone, in each case based on the weight of the inhibitor solution.

## Revendications

1. Procédé pour l'arrêt immédiat de polymérisations radicalaires, comprenant l'addition d'une solution d'inhibiteur contenant de la phénothiazine et au moins 50% en poids de N-alkylpyrrolidone, par rapport au poids de la solution d'inhibiteur, pour former un système à polymérisation radicalaire, **caractérisé en ce que** la solution d'inhibiteur contient en outre du p-méthoxyphénol.

2. Procédé selon la revendication 1, **caractérisé en ce que** la N-alkylpyrrolidone est de la N-méthylpyrrolidone et / ou de la N-éthylpyrrolidone.

3. Procédé selon la revendication 1 ou 2, **caractérisé en ce que** la teneur en phénothiazine de la solution d'inhibiteur est, par rapport au poids de la solution d'inhibiteur, d'au moins 10% en poids.

4. Procédé selon l'une des revendications 1 à 3, **caractérisé en ce que** la teneur en p-méthoxyphénol de la solution d'inhibiteur est, par rapport au poids de la solution d'inhibiteur, de 2,5 à 12,5% en poids.

5. Procédé selon l'une des revendications 1 à 4, **caractérisé en ce que** la teneur en p-méthoxyphénol de la solution d'inhibiteur est, par rapport au poids de la solution d'inhibiteur, de 5 à 10% en poids.

6. Procédé selon l'une des revendications 1 à 5, **caractérisé en ce que** le système à polymérisation radicalaire est constitué de monomères (méth)acryliques polymérisant par voie radicalaire dans la masse.

7. Procédé selon la revendication 6, **caractérisé en ce que** le monomère (méth)acrylique est de l'acide (méth)acrylique.

8. Procédé selon la revendication 6, **caractérisé en ce que** le monomère (méth)acrylique est un ester d'acide (méth)acrylique.

9. Solution d'inhibition, contenant de la phénothiazine, du p-méthoxyphénol et une N-alkylpyrrolidone, pour l'arrêt immédiat de polymérisations radicalaires.

10. Solution d'inhibition selon la revendication 9, contenant de la phénothiazine, du p-méthoxyphénol et de la N-méthylpyrrolidone.

11. Solution d'inhibition selon la revendication 10, contenant au moins 10% en poids de phénothiazine, de 5 à 10% en poids de p-méthoxyphénol et au moins 50% en poids de N-méthylpyrrolidone, à chaque fois par rapport au poids de la solution d'inhibition.
